(19) Europäisches Patentamt
European Patent Office
Office européen des brevets

(11) EP 1 619 679 A1

(12) # EUROPEAN PATENT APPLICATION
published in accordance with Art. 158(3) EPC

(43) Date of publication:
**25.01.2006 Bulletin 2006/04**

(21) Application number: **04728452.6**

(22) Date of filing: **20.04.2004**

(51) Int Cl.:
***G11B 7/135*** *(1985.01)*

(86) International application number:
**PCT/JP2004/005626**

(87) International publication number:
**WO 2004/097818 (11.11.2004 Gazette 2004/46)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **25.04.2003 JP 2003120995**

(71) Applicant: **Konica Minolta Opto, Inc.**
**Hachioji-shi,**
**Tokyo 192-8505 (JP)**

(72) Inventors:
- **SAKAMOTO, Katsuya**
**Konica Minolta Opto, Inc.**
**Hachioji-shi, Tokyo 192-8505 (JP)**
- **YOSHIDA, Fumiaki**
**Konica Minolta Opto, Inc.**
**Hachioji-shi, Tokyo 192-8505 (JP)**

(74) Representative: **Roberts, Mark Peter**
**J.A. Kemp & Co.,**
**14 South Square,**
**Gray's Inn**
**London WC1R 5JJ (GB)**

(54) **OPTICAL PICKUP DEVICE**

(57) An optical pickup apparatus for reproducing and/or recording information on an optical information recording medium, includes a light source to emit a light flux with a wavelength in the range of 200 - 700 nm, the emitted light flux having a light intensity distribution in nearly Gaussian distribution; a light intensity distribution converting element to transform the light intensity distribution of the light flux emitted by the light source into a desired light intensity distribution wherein a light intensity of an outgoing light passing through an outermost periphery of an effective aperture becomes 45 % - 95 % of a light intensity of an outgoing light passing through an optical axis position; and an objective optical element to converge a light flux emitted by the light intensity distribution converting element onto an information recording surface on the optical information recording medium.

FIG. 1

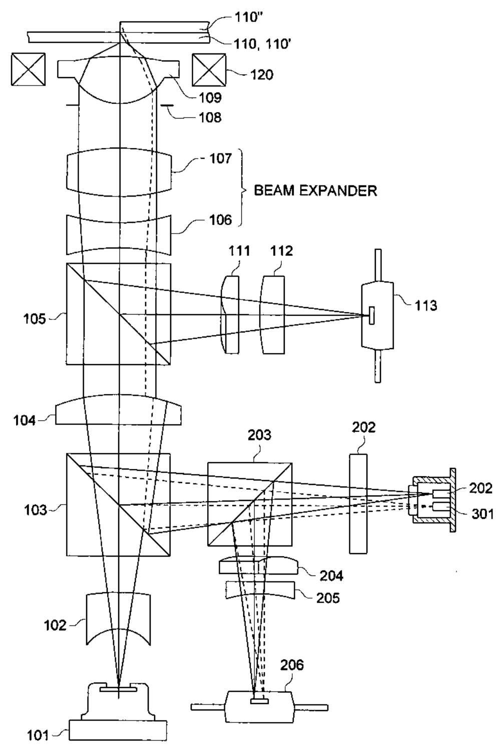




Printed by Jouve, 75001 PARIS (FR)

**Description**

## BACKGROUND OF THE INVENTION

The present invention relates to an optical pick-up device, particularly, to an optical pick-up device by which the recording and/or reproducing of the information can be conducted in higher density.

In the optical pick-up device by which the recording and/or reproducing of the information can be conducted for the optical disk such as DVD (Digital Versatile Disc), to record and/or reproduce higher-densified information, it is necessary that a recording pit is small-sized, and therefore, it is necessary that a light converging spot is small-sized. Herein, when a light source wavelength is $\lambda$, and a numerical aperture of an objective lens is NA, because a spot diameter $\omega$ is in proportion to $\lambda$/NA, to make a light converging spot small, it is necessary that the wavelength is shortened, or the numerical aperture is enlarged.

However, in the lens whose numerical aperture is large, for the ray of light of the peripheral portion in which particularly the NA in light flux is high, because the light incident angle on an objective lens is increased, the reflection amount from the optical surface is increased, and by the lowering of the transmission factor • peripheral light amount, there is a possibility that a good light converging spot can not be formed.

In the optical system of the optical pick-up device, when the light intensity of the peripheral portion of the light flux, that is, high NA portion, is lowered, a bad influence is affected on the formation of the light converging spot (to obtain a required spot diameter). As described above, because the spot diameter $\omega$ is in proportion to $\lambda$/NA, in a flow of high densification of the recent optical information recording medium, to obtain the smaller spot diameter, when the blue violet laser light source is used, the bad influence on the spot by the lowering of the peripheral light intensity is particularly conspicuous.

Further, when the diffraction ring-shaped zone whose section in the optical axis direction is saw-toothed shape, is provided on the objective lens for the purpose to realize the interchangeability of the different optical information recording media or to increase the aberration characteristic, there is lowering of the peripheral light amount by the eclipse (a phenomenon in which, when the diffracted light crosses the circular groove, it does not contribute the light converging) or the production error (transfer failure of the diffraction ring-shaped zone called sagging), in its structure. Further, in the case of the objective lens by which the interchangeability of the different optical information recording media is realized by using the diffraction ring-shaped zone, as compared to an exclusive use objective lens, generally, there is a lowering of the light amount.

In addition to that, because generally, the light flux projected from the laser light source such as a semiconductor has originally almost Gaussian light intensity distribution (a distribution in which the light intensity is gradually lowered as it advances from the center to the periphery), the light intensity is lowered in the peripheral portion of the light flux, however, as much as it is high NA lens, this tendency is emphasized.

For such a problem, when the light flux projected from the semiconductor laser light source is incident, so-called a light intensity distribution conversion element by which the light intensity of about Gaussian distribution is converted into almost equalized light flux, and it is projected, is well known (refer to Patent Document 1).

[Patent Document 1]

Patent No. 3370612 specification.

When such an element is applied to the optical pick-up device, even when the light flux projected from the light source has the light intensity of an about Gaussian distribution, when, before it is incident on the objective lens, it is made the equalized light intensity, it is even considered that the above-described problem can be solved. However, for example, in the optical pick-up device, when the light intensity distribution of the light flux incident on the objective lens is equalized, it is found that there is a possibility in which the side-robe of the spot light light-converging on the information recording surface is too large, on the contrary, the certainty of the information recording and/or reproducing is lowered.

## SUMMARY OF THE INVENTION

In view of such a problem, the present invention is attained, and when the light flux is made incident on the objective lens under the condition that the light intensity distribution of the light flux projected from the light source is optimized, the optical pick-up device by which the recording and/or reproducing of the information is securely conducted for the optical information recording medium, is provided.

Because an optical pick-up device written in item 1 has, in an optical pick-up device by which the reproducing and /or recording of the information is conducted for the optical information recording medium by using the light flux projected from the light source whose wavelength is 200 - 700 nm, a light intensity distribution conversion element by which the light intensity of the projected light passing the outmost peripheral portion of the effective diameter changes the light flux which is incident from the light source, and whose light intensity distribution is about Gaussian distribution, to a desired light intensity distribution between 45 - 95 % of the light intensity of the projected light passing the optical axis position, and an objective optical element by which the light flux projected from the light intensity distribution conversion element is converged on the information recording surface of the optical information recording medium, when the peripheral light amount of the light flux incident on the objective optical element, is increased by the light intensity distribution conversion element, in an optimum range, considering the side-robe and spot diameter, the recording and/or reproducing of the information can be more securely conducted for the optical information.recording medium.

Fig. 6(a) is a view showing the relationship between a change of the peripheral intensity ratio (a ratio of the light intensity of the periphery to the central light intensity) in the spot light and the beam diameter, and Fig. 6(b) is a view showing the relationship between a change of the peripheral intensity ratio in the spot light and the side-robe. As shown in Fig. 6(a), as the peripheral intensity ratio of the spot light is increased, a beam diameter can be suppressed small, however, on the one hand of it, when the peripheral intensity ratio of the spot light is increased, the side-robe becomes large, for example, when the peripheral intensity ratio is 100 %, the increasing ratio of the side-robe is increased by about 1.8 %, and there is a possibility that a bad influence is affected on the recording and/or reproducing of the information. In contrast to this, according to the present invention, when the peripheral intensity ratio is made not smaller than 45 %, the beam diameter is suppressed small, and when the peripheral intensity ratio is made not larger than 95 %, an increase of the side-robe is suppressed, thereby, the recording and/or reproducing of the information can be adequately conducted.

## BRIEF DESCRIPTION OF THE DRAWINGS

Fig. 1 is an outline sectional view of an optical pick-up device according to embodiments of the present invention.
Fig. 2 is a sectional view of a beam expander according to the present embodiment.
Fig. 3 is a view showing the characteristic of the beam expander.
Fig. 4 is a sectional view of a correction lens which is a light intensity distribution conversion element according to another embodiment.
Fig. 5 is a view showing the characteristic of the correction lens.
Fig. 6(a) is a view showing the relationship between a change of the peripheral intensity ratio in a spot light and a beam diameter, and Fig. 6(b) is a view showing the relationship between a change of the peripheral intensity ratio in the spot light and a side-robe.

## DETAILED DESCRIPTION OF THE PREFERRED EMBODIMENT

Hereinafter, the preferable embodiment of the invention will be explained.

As to an optical pick-up device written in item 2, in the invention written in item 1, the light intensity distribution conversion element satisfies the following expression when the light intensity in the vicinity of the effective diameter outermost peripheral portion in an incident light is A, the light intensity at the optical axis position is B, the light intensity in the vicinity of effective diameter outermost peripheral portion in the projected light is C, and the light intensity at the optical axis position is D. Hereupon, the effective diameter outermost peripheral portion is defined as a diameter determined by a predetermined stop in the optical pick-up device.

$$1.2 < (C/D)/(B/A) < 1.5$$

Because an optical pick-up device written in item 3 has, in the optical pick-up device by which the reproducing and/or recording of the information is conducted for the optical information recording medium by using the light flux projected from the light source whose wavelength is 200 - 700 nm, a light intensity distribution conversion element by which the light intensity of the projected light passing the effective diameter outermost peripheral portion changes the light flux whose light intensity distribution is about Gaussian distribution, which is incident from the light source, to a desired light intensity distribution between 45 - 95 % of the light intensity of the projected light passing the optical axis position, and an objective optical element by which the light flux projected from the light intensity distribution conversion element is light-converged on the information recording surface of the optical information recording medium, and on the optical function surface of the objective optical element, it is provided with an optical path difference grant ring-shaped zone structure, formed of the ring-shaped zone around the optical axis, and structured so that a predetermined optical path difference is given each other to the light flux passed each ring-shaped zone, when, by the light intensity distribution conversion element, the peripheral light amount of the light flux incident on the objective optical element is increased in an optimum range considering the side-robe and spot diameter, the recording and/or reproducing of the information can be more securely conducted for the optical information recording medium. Further, by the optical path difference grant ring-shaped zone structure, the chromatic aberration correction at the time of information recording and/or reproducing, spherical aberration correction when the optical information recording media whose protective layer thickness is different, are used, and the spherical aberration correction due to the refractive index change of the objective optical element by the temperature change, can be conducted.

In the optical pickup apparatus of item 1, it is preferable that the optical intensity converting element transforms a light intensity distribution having about Gaussian distribution of a light flux emitted by the light source into a desired light intensity distribution wherein a light intensity of an outgoing light passing through an outermost periphery of an effective aperture becomes 60 % - 80 % of a light intensity of an outgoing light passing through an optical axis position. Therefore, the side-robe doesn't exceed 1.7% and it prevents the optical pickup apparatus from recording information on a neighboring track at the time of information recording.

As to an optical pick-up device written in item 4, in the invention written in item 3, the light intensity distribution conversion element satisfies the following expression, when the light intensity in the vicinity of the effective diameter outermost peripheral portion in the incident light is A, the light intensity at the optical axis position is B, the light intensity in the vicinity of the effective diameter outermost peripheral portion in the projected light is C, and the light intensity at the optical axis position is D.

$$1.2 < (C/D)/(B/A) < 1.5$$

As to the optical pick-up device written in item 5, in the invention written in item 3 or 4, the optical path difference grant ring-shaped zone structure is at least one of the diffraction structure, phase structure, and multi-level.

Because an optical pick-up device written in item 6 has, in the optical pick-up device by which the reproducing and/or recording of the information is conducted for the optical information recording medium by using the light flux projected from the light source whose wavelength is 200 - 700 nm, a light intensity distribution conversion element by which the light intensity of the projected light passing the effective diameter outermost peripheral portion changes the light flux whose light intensity distribution is about Gaussian distribution, which is incident from the light source, to a desired light intensity distribution between 45 - 95 % of the light intensity of the projected light passing the optical axis position, and an objective optical element by which the light flux projected from the light intensity distribution conversion element is light-converged on the information recording surface of the optical information recording medium, and an objective optical element whose numerical aperture is not smaller than NA 0.65 by which the light flux projected from the light intensity distribution conversion element is light-converged on the information recording surface of the optical information recording medium, when, by the light intensity distribution conversion element, the peripheral light amount of the light flux incident on the objective optical element is made increased in an optimum range considering the side-robe and spot diameter, the recording and/or reproducing of the information can be more securely conducted for the optical information recording medium. Further, when a NA not smaller than the numerical aperture NA 0.65 is attained, the high density recording and/or reproducing of the information can be conducted.

As to an optical pick-up device written in item 7, in the invention written in item 6, the light intensity distribution conversion element satisfies the following expression, when the light intensity in the vicinity of the effective diameter outermost peripheral portion in the incident light is A, the light intensity at the optical axis position is B, the light intensity in the vicinity of the effective diameter outermost peripheral portion in the projected light is C, and the light intensity at the optical axis position is D.

$$1.2 < (C/D)/(B/A) < 1.5$$

As to the optical pick-up device written in item 8, in the invention written in any one of items 1 to 7, because a collimator element by which the finite light flux is incident and the infinite light flux is projected, is arranged between the light source and the light intensity distribution conversion element, a degree of freedom of the design work of the light intensity distribution conversion element is increased.

As to the optical pick-up device written in item 9, in the invention written in items 1 to 7, because the light intensity distribution conversion element is a component of a beam expander, the number of parts of the optical system is reduced.

As to the optical pick-up device written in item 10, in the invention written in item 9, because one of components of the beam expander is displaceable in the optical axis direction, and has a spherical aberration correction function, the recording and/or reproducing of the information can be more adequately conducted.

As to the optical pick-up device written in item 11, in the invention written in item 9, because one of components of the beam expander is fixed in the optical axis direction and has an optical path difference grant structure, the recording and/or reproducing of the information can be more adequately conducted.

As to the optical pick-up device written in item 12, in the invention written in any one of items 9 to 11, the beam expander is a Keplerian type. For example, because the Keplerian type beam expander uses 2 positive lenses as components, there is an advantage that each lens estimation is easy.

As to the optical pick-up device written in item 13, in the invention written in any one of items 9 to 11, the beam expander is a Galilean type. For example, in the Galilean type beam expander, by the lens composition of negative lens and positive lens, even when each lens power is small, because the space-saved arrangement becomes possible, it is advantageous for the size reduction of the optical pick-up device.

As to the optical pick-up device written in item 14, in the invention written in any one of items 1 to 13, because the light intensity distribution conversion element is a component of the beam shaper, the number of parts of the optical system is reduced.

As to the optical pick-up device written in item 15, in the invention written in any one of items 1 to 14, because the coma is corrected when the objective optical element is inclined to the optical axis, the recording and/or reproducing of the information can be more adequately conducted.

As to the optical pick-up device written in item 16, in the invention written in any one of items 1 to 15, because the chromatic aberration correction element is provided, the recording and/or reproducing of the information can be more adequately conducted.

As to the optical pick-up device written in item 17, in the invention written in any one of items 1 to 16, because the light intensity distribution conversion element is a separated body from the objective optical element, and because the light intensity distribution conversion element and objective optical element can be separately designed, a degree of freedom of the design work is increased.

As to the optical pick-up device written in item 18, in the invention written in any one of items 1 to 17, because, in the light intensity distribution conversion element, the light intensity ratio of the projected light flux to the incident light flux can be locally changed, for example, the arbitrary light intensity distribution adjusted for the characteristic of the light source can be obtained.

As to the optical pick-up device written in item 19, in the invention written in any one of items 1 to 18, because, by using the light fluxes projected from a plurality of light sources, the recording and/or reproducing of the information is conducted for different optical information recording media, the optical pick-up device whose added value is higher, can be provided.

As to the optical pick-up device written in item 20, in the invention written in any one of items 1 to 19, because the objective optical element is formed of a plastic as the raw material, it can be obtained in a large amount at low cost.

As to the optical pick-up device written in item 21, in the invention written in any one of items 1 to 19, because the objective optical element is formed of glass as the raw material, even when there is an environmental change, a stable performance can be provided.

In the present specification, the objective optical element indicates, in a narrow sense, an optical element (for example, a lens) having a light converging action, which is arranged so as to face the optical information recording medium at a position of the most optical information recording medium side, under the situation that the optical information recording medium is loaded in the optical pick-up device, and in a broad sense, it indicates an optical element which can actuate in at least its optical axis direction by an actuator, together with that optical element.

Accordingly, in the present specification, the numerical aperture NA on the optical information recording medium side (image side) of the objective optical element, indicates the numerical aperture NA of the surface positioned on the most optical information recording medium side of the objective optical element. Further, in the present specification, the necessary numerical aperture NA shows the numerical aperture regulated by the standard of respective optical information recording media, or to respective optical information recording media, corresponding to the wavelength of the light source to be used, the numerical aperture of the objective optical element of the diffraction limit performance by which the spot diameter necessary for conducting the recording or reproducing of the information can be obtained.

The diffraction structure used in the present specification means a mode that, on the surface of the optical element, for example, on the surface of the lens, a relief is provided, and an action by which the light flux is light-converged or diverged by the diffraction, is given, and when there is areas in which the diffraction is generated and not generated in one optical surface, it means an area in which the diffraction is generated. As a shape of the relief, for example, on the surface of the optical element, it is formed as an almost concentric circular ring-shaped zone around the optical axis, and when its section is viewed in the plane including the optical axis, it is well known that each ring-shaped zone has a shape like a saw-tooth, and such a shape is included.

Referring to drawings, the present invention will be further detailed below. Fig. 1 is an outline sectional view of the optical pick-up device according to the embodiment of the present invention by which the recording/reproducing of the information can be conducted for all of the conventional DVD (also called the second optical disk) and CD (also called the third optical disk). Hereupon, all of the first semiconductor laser 101, the second semiconductor laser 201, and the third semiconductor laser 301 have the light intensity of almost Gaussian distribution (which is reduced as it goes from the optical axis to the periphery).

In Fig. 1, in the light flux projected from the first semiconductor laser 101 (wavelength $\lambda 1$ = 380 nm - 450 nm) as the first light source, after its beam shape is corrected by the beam shaper 102, it passes the first beam splitter 103, and is made parallel light flux by a collimator 104 which is a collimator element, it passes the second beam splitter 105, and is incident on a beam expander having the optical elements 106, 107. The beam expander (106, 107) at least one (preferably, optical element 106) of which can be moved in the optical axis direction, has a function which changes (herein, enlarges) the light flux diameter of the parallel light flux, and corrects the spherical aberration. Further, on the optical surface of the other optical element 107 of the beam expander, the optical path difference grant structure (diffraction ring-shaped zone) is formed, and hereby, the chromatic aberration correction is conducted for the light flux projected from the first semiconductor laser 101. The diffraction structure for the chromatic aberration correction may be provided not only to the optical element 107, but also to the other optical element (collimator 104).

As described above, when the beam expander (106, 107) as the light intensity distribution conversion element is provided, the light intensity of almost Gaussian distribution can be changed to more optimum intensity distribution in the manner as will be described later, further, a chromatic aberration correction and spherical aberration correction can be conducted, and in addition to that, for example, in the case where the high density DVD has 2 layers of the information recording surfaces, when the optical element 106 is moved in the optical axis direction, the information recording surface can be selected. The beam expander (106, 107) is arranged in a common optical path through which the light fluxes from the second semiconductor laser 201, the third semiconductor laser 301, which will be described later, also pass.

In Fig. 1, the light flux transmitted the beam expander (106, 107) passes a stop 108, and by the objective lens 109 which is the objective optical element formed of only the refractive surfaces, it is light converged on its information recording surface through the protective layer (thickness t1 = 0.1 - 0.7 mm, preferably, 0.1 or 0.6 mm) of the first optical disk 110, and the light converging spot is formed here. Hereupon, the objective lens 109 may be formed of glass as a raw material, however, for a reason that the aberration deterioration generated due to environmental changes is arbitrarily corrected by the beam expander (106, 107), because a limit of the required optical characteristic is softened, a lower cost plastic raw material can be used.

Then, because the light flux modulated by the information pit on the information recording surface and reflected, passes again the objective lens 109, stop 108, and beam expander (107, 106), and is reflected by the second beam splitter 105, and the astigmatism is given to it in the cylindrical lens 111, it passes a sensor lens 112, and incident on the light receiving surface of a light detector 113, a reading signal of the information recorded in the first optical disk 110 can be obtained.

Further, by detecting the light amount change by the shape change, and position change of a spot on the light detector 113, the focusing detection or track detection is conducted. According to this detection, the two-dimensional actuator 120 integrally moves the objective lens 109 so that the actuator image-focuses the light flux from the first semiconductor laser 101 onto the information recording surface of the first optical disk 110.

Further, in Fig. 1, the second semiconductor laser 201 and the third semiconductor laser 301 are attached to the same substrate, and is made a single unit which is so-called 2 laser 1 package. The light flux projected from the second semiconductor laser 201 as the second light source (wavelength $\lambda 2$ = 600 nm - 700 nm) passes a 1/4 wavelength plate 202, and the third beam splitter 203, and is reflected by the first beam splitter 103, and while the light flux diameter is stop-down by the collimator 104, it becomes parallel light flux, and passes the second beam splitter 105, and is incident on the beam expander (106, 107), and is converted into the finite divergent light flux having a weak divergent angle here. As described above, the beam expander (106, 107) can conduct the spherical aberration correction. Hereupon, to the collimator 104 as an aperture limit element, a dichroic coating is given, and when the passing area of the light flux is limited corresponding to the wavelength, for example, for the light flux from the first semiconductor laser 101, the numerical aperture of the objective lens 109 NA = 0.65 is realized, for the light flux from the second semiconductor laser 201, the numerical aperture of the objective lens 109 NA = 0.65 is realized, and for the light flux from the third semiconductor laser 301, the numerical aperture of the objective lens 109 NA = 0.45 is realized. However, a combination of numerical apertures is not limited to this.

In Fig. 1, the light flux transmitted the beam expander (106, 107) passes the stop 108, under the finite divergent condition having a weak divergent angle, and is light converged through the protective layer (thickness t2 = 0.5 - 0.7 mm, preferably, 0.6 mm)of the second optical disk 110' on its information recording surface by the objective lens 109 formed of only refractive surface, and the light converging spot is formed here.

Then, because the light flux modulated by the information pit on the information recording surface and reflected, passes again the objective lens 109, stop 108, beam expander (107, 106), second beam splitter 105, and collimator 104, and is reflected by the first beam splitter 103, and in succession, reflected by the third beam splitter 203, and after that, the astigmatism is given by the cylindrical lens 204, and it passes the sensor lens 205, and is incident on the light receiving surface of the light detector 206, by using its output signal, the reading signal of the information recorded in the second optical disk 110' can be obtained.

Further, the light amount change due to the shape change and position change of the spot on the light detector 113 is detected, and the focusing detection or track detection is conducted. According to this detection, the two-dimensional actuator 120 integrally moves the objective lens 109 so that the light flux from the third semiconductor laser 301 is image-focused on the information recording surface of the second optical disk 110'.

Further, in Fig. 1, the light flux projected from the third semiconductor laser 301 (wavelength $\lambda3$ = 770 nm - 830 nm)as the third light source passes the 1/4 wavelength plate 202, passes the third beam splitter 203, and is reflected by the first beam splitter 103, and while the light flux diameter is stopped down by the collimator 104, it becomes parallel light flux, passes the second beam splitter 105, and is incident on the beam expander (106, 107), and herein, is converted into the finite divergent light flux having the stronger (larger) divergent angle than in the case of the light flux of the second semiconductor laser 201. In the same manner, the beam expander (106, 107) can conduct the chromatic aberration correction and spherical aberration correction.

In Fig. 1, the light flux transmitted the beam expander (106, 107) passes the stop 108 under the finite divergent condition having strong divergent angle, and by the objective lens 109 formed of only refractive surface, is light converged on its information recording surface through the protective layer (thickness t3 = 1.1 - 1.3 mm, preferably, 1.2 mm) of the third optical disk 110", and forms the light converging spot here.

Then, because the light flux modulated by the information pit on the information recording surface and reflected, passes again the objective lens 109, stop 108, beam expander (107, 106), second beam splitter 105, and collimator 104, and is reflected by the first beam splitter 103, and in succession, reflected by the third beam splitter 203, and after that, the astigmatism is given by the cylindrical lens 204, and it passes the sensor lens 205, and is incident on the light receiving surface of the light detector 206, by using its output signal, the reading signal of the information recorded in the third optical disk 110" can be obtained.

Further, the light amount change due to the shape change and position change of the spot on the light detector 113 is detected, and the focusing detection or track detection is conducted. According to this detection, the two-dimensional actuator 120 integrally moves the objective lens 109 so that the light flux from the second semiconductor laser 201 is image-focused on the information recording surface of the third optical disk 110".

Fig. 2 is a sectional view of the beam expander according to the present embodiment, and Fig. 3 is a view showing the characteristic of such a beam expander. In Fig. 3, to the light flux incident on the beam expander, in the projected light flux OL, the light intensity distribution is corrected, however, it is perfectly uniform, and it is in the situation that the intensity of light passing the outermost peripheral portion of the effective diameter (herein, corresponds to a stop diameter) is about 70 % of the intensity of light passing the optical axis position. In this manner, when the light amount of the periphery of the light flux is optimized, the optimization of the side-robe of the light converging spot is conducted, and the more adequate recording and/or reproducing of the information can be conducted.

Lens data of a preferable example as such a beam expander is shown in Table 1. Hereupon, it is defined hereinafter (lens data in Table is included) that power of 10 (for example, $2.5 \times 10^{-3}$) is expressed by using E (for example, 2.5 × E-3).

Table 1

| | i-th Surface | ri | di | ni(405nm) | |
|---|---|---|---|---|---|
| | 0 | | ∞ | | |
| | 1 | ∞ | 1.000 | 1.0 | Stop diameter $\phi$2.6mm |
| L1 | 2 | -12.2508 | 0.800 | 1.525 | |
| | 3 | 11.1489 | 1.011 | 1.0 | |
| L2 | 4 | 13.0940 | 1.000 | 1.525 | |
| | 5 | -12.9706 | - | 1.0 | |

Aspheric surface data

| | |
|---|---|
| The second surface aspheric surface coefficient | $\kappa$ -1.7105 x E-0<br>A4 +2.0283 x E-2<br>A6 +2.0283 x E-3 |

Table continued

| | |
|---|---|
| | A8 +1.4929 x E-3<br>A10 +2.1103 x E-4 |
| The third surface aspheric surface coefficient | κ 0<br>A4 +1.8405 x E-2<br>A6 +1.8405 x E-2<br>A6.+2.8517 x E-3<br>A10 +2.8568 x E-4 |
| The fourth surface aspheric surface coefficient | κ 0<br>A4 -7.8094 x E-3<br>A6 +5.2097 x E-3<br>A8 -3.2228 x E-4<br>A10 0 |
| The fifth surface aspheric surface coefficient | κ -5.0374 x E-0<br>A4 -7.0512 x E-3<br>A6 + 3.7596 x E-3<br>A8 +1.2812 x E-4<br>A10 +2.9309 x E-5 |

Both surfaces of the objective lens are aspheric surfaces shown by [Arith-1]. Where, Z is an axis in the optical axis, h is a height from the optical axis, r is a paraxial radius of curvature, κ is conical coefficient, and $A_{2i}$ is an aspheric surface coefficient.

[Arith-1]

$$Z = \frac{(h^2/r)}{1+\sqrt{1-(1+\kappa)(h/r)^2}} + \sum_{i=1}^{9} A_{2i} h^{2i}$$

Fig. 4 is a sectional view of the correction lens which is a light intensity distribution conversion element according to another embodiment, and Fig. 5 is a view showing the characteristic of such a lens. A correction lens 406 shown in Fig. 5 can be used instead of the beam expander (106, 107) in Fig. 1. To the light flux 1L incident on the correction lens 406, in the projected light flux OL, the light intensity distribution is corrected, but, is not perfectly uniform, and the intensity of the light passing the outermost peripheral portion of the effective diameter (herein, corresponds to a stop diameter) in the projected light flux OL is made 65 % of the intensity of light passing the optical axis position. In the same manner, when the light amount of the periphery of the light flux incident on particularly objective lens is optimized, the side-robe of the light converging spot is optimized, and the more adequate recording and/or reproducing of the information can be conducted.

Lens data of the preferable example as such a correction lens is shown in Table 2.

Table 2

| i-th surface | ri | di | ni (405 nm) | |
|---|---|---|---|---|
| 0 | | ∞ | | |
| 1 | ∞ | 5.000 | 1.0000 | Stop diameter ϕ3.5 mm |
| 2 | -2.2933 | 2.000 | 1.5000 | |
| 3 | -2.9558 | 0.000 | 1.0000 | |
| 4 | ∞ | 5.000 | 1.0000 | |

Aspheric surface data

| The second surface | |
|---|---|
| Aspheric surface coefficient | κ -9.9852 x E-1<br>A4 +1.2648 x E-2<br>A6 +2.3791 x E-3<br>A8 -3.1426 x E-4 |
| The third surface | |
| Aspheric surface coefficient | κ -3.9775 x E-0<br>A4 -9.8474 x E-3<br>A6 +2.5830 x E-3<br>A8 -1.2003 x E-4 |

Hereupon, as the light intensity conversion element, it may also be a component of the beam shaper, further, at the time of production or after that, when the objective lens is inclined to the optical axis, the coma can also be corrected, or a chromatic aberration correction element may also be provided. In the light intensity distribution conversion element, the ratio of the light intensity of the projected light flux to the incident light flux may also be locally changeable. In the objective lens of the present embodiment, plastic is used as a raw material, however, glass may also be used as a raw material. Further, in the above-described embodiment, the optical pick-up device of the interchangeable type by which the recording and/or reproducing of the information can be conducted for different optical disks is listed as an example, however, it is not limited to this, and the present invention can also be applied to an exclusive optical pick-up device by which the recording and/or reproducing of the information is conducted for a single kind of optical disk.

According to the present invention, when the light flux is incident on the objective lens under the condition that the light intensity distribution of the light flux projected from the light source is optimized, the optical pick-up device which can securely conduct the recording and/or reproducing of the information for the optical information recording medium, can be provided.

## Claims

1. An optical pickup apparatus for reproducing and/or recording information on an optical information recording medium, comprising:

    a light source to emit a light flux with a wavelength in the range of 200 - 700 nm, the emitted light flux having a light intensity distribution in nearly Gaussian distribution;
    a light intensity distribution converting element to transform the light intensity distribution of the light flux emitted by the light source into a desired light intensity distribution wherein a light intensity of an outgoing light passing through an outermost periphery of an effective aperture becomes 45 % - 95 % of a light intensity of an outgoing light passing through an optical axis position; and
    an objective optical element to converge a light flux emitted by the light intensity distribution converting element onto an information recording surface on the optical information recording medium.

2. The optical pickup apparatus of claim 1, wherein the optical intensity distribution converting element transforms a light intensity distribution in nearly Gaussian distribution of a light flux emitted by the light source into a desired light intensity distribution wherein a light intensity of an outgoing light passing through an outermost periphery of an effective aperture becomes 60 % - 80 % of a light intensity of an outgoing light passing through an optical axis position.

3. The optical pickup apparatus of claim 1, wherein the light intensity distribution converting element satisfies the following formula:

$$1.2 < (C / D) / (B / A) < 1.5$$

where A is a light intensity of an incident light around an outermost periphery of an effective aperture, B is a light intensity of an incident light on an optical axis position, C is a light intensity of an outgoing light around an outermost periphery of an effective aperture and D is a light intensity of an outgoing light on an optical axis position.

**4.** The optical pickup apparatus of claim 1, wherein the optical intensity distribution converting element is an element structuring a beam expander.

**5.** The optical pickup apparatus of claim 4, wherein one element structuring the beam expander is displaceable along an optical axis and has a spherical aberration correcting function.

**6.** The optical pickup apparatus of claim 4, wherein one element structuring the beam expander is fixed along an optical axis and has a spherical aberration correcting function.

**7.** The optical pickup apparatus of claim 4, wherein the beam expander is Keplerian type.

**8.** The optical pickup apparatus of claim 5, wherein the beam expander is Galilean type.

**9.** The optical pickup apparatus of claim 1, wherein the optical intensity distribution converting element is an element structuring a beam shaper.

**10.** The optical pickup apparatus of claim 1, wherein the light intensity distribution converting element is provided separately from the objective optical element.

**11.** The optical pickup apparatus of claim 1, wherein the light intensity distribution converting element is partially changeable a light intensity ratio of an outgoing light flux to an incident light flux.

**12.** The optical pickup apparatus of claim 1, wherein a collimating element for emitting an infinite light flux in the case that a finite light flux is introduced thereto is arranged between the light source and the light intensity distribution converting element.

**13.** The optical pickup apparatus of claim 1, wherein an optical functional surface of the objective optical element comprises an optical path difference providing ring-shaped structure which includes ring-shaped zones around the optical axis and is structured so that the ring-shaped zones provide pre-defined optical path differences to light fluxes passing through the each ring-shaped zone between light fluxes passing through neighboring zones.

**14.** The optical pickup apparatus of claim 13, wherein the optical path difference providing structure is one of a diffractive structure, a phase structure and multi-level structure.

**15.** The optical pickup apparatus of claim 1, wherein the objective optical element has a numerical aperture NA of 0.65 and more.

**16.** The optical pickup apparatus of claim 1,the objective optical element is tilted to the optical axis so that a comatic aberration is corrected.

**17.** The optical pickup apparatus of claim 1, wherein the objective optical element is formed by a plastic material.

**18.** The optical pickup apparatus of claim 1, wherein the objective optical element is formed by a glass material.

**19.** The optical pickup apparatus of claim 1 further comprising a chromatic aberration correcting element.

**20.** The optical pickup apparatus of claim 1, which further comprises a plurality of light sources and conducts information recording and/or reproducing on various optical information recording media.

FIG. 1

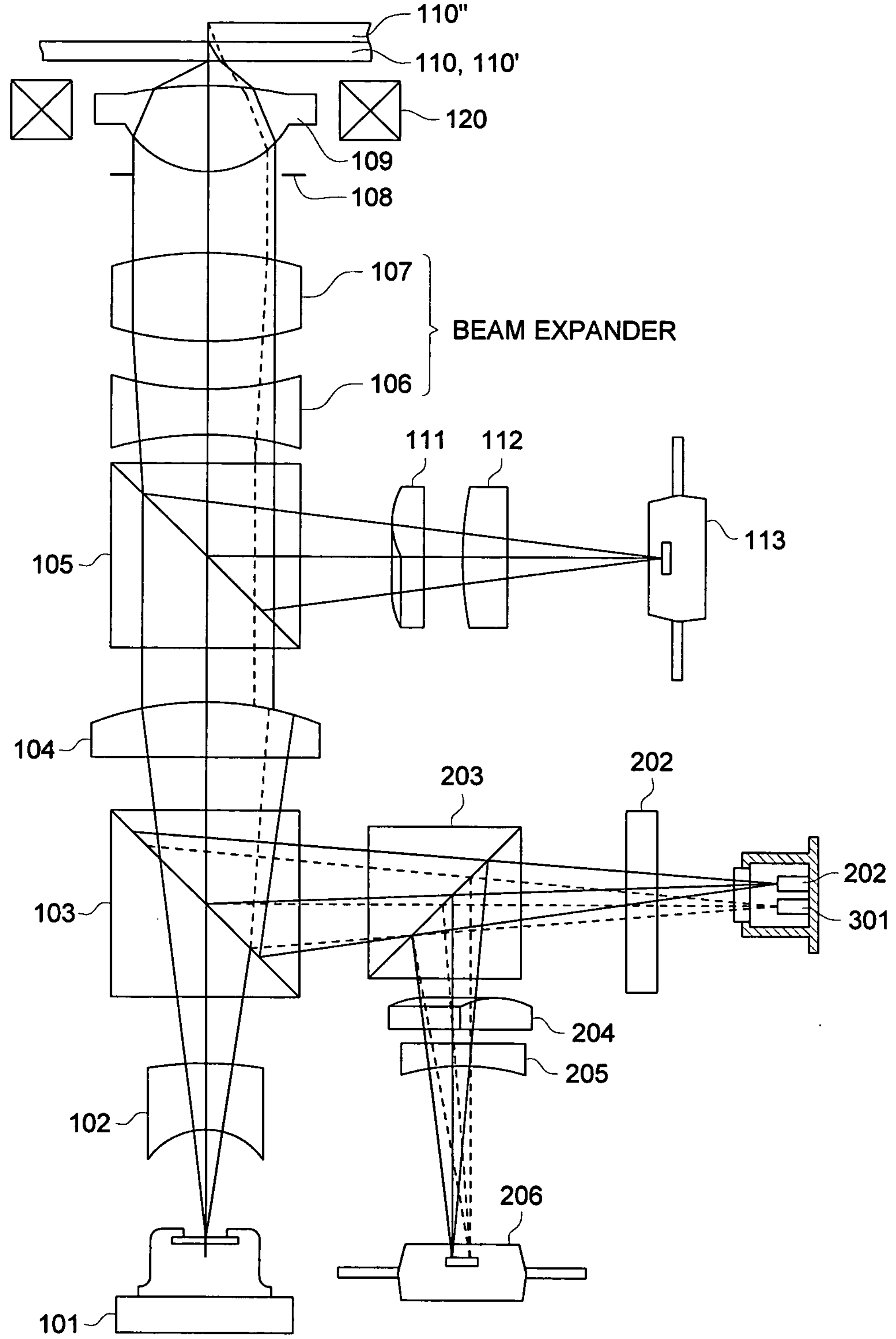
110"
110, 110'
120
109
108
107
BEAM EXPANDER
106
111
112
113
105
104
203
202
202
301
103
204
205
102
206
101

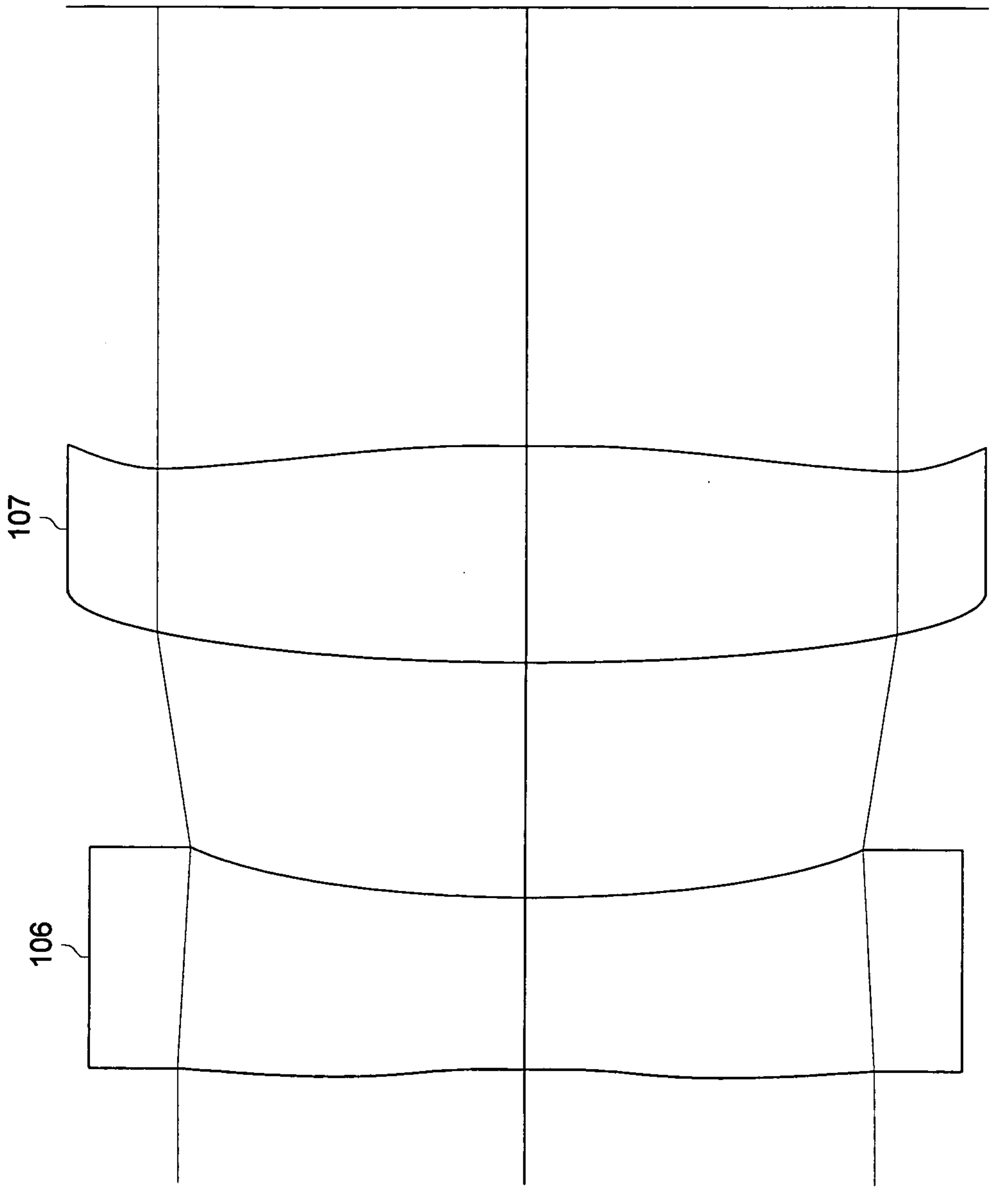


FIG. 2

FIG. 3

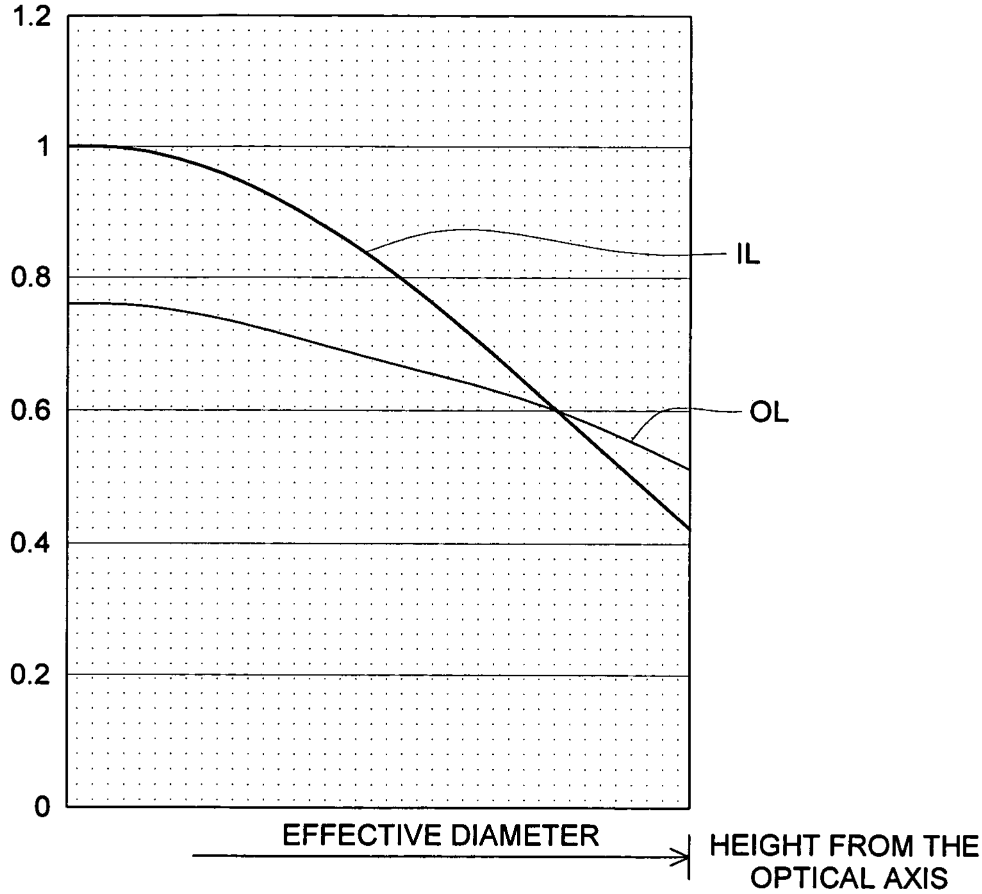
1.2
1
0.8
0.6
0.4
0.2
0
IL
OL
EFFECTIVE DIAMETER
HEIGHT FROM THE OPTICAL AXIS

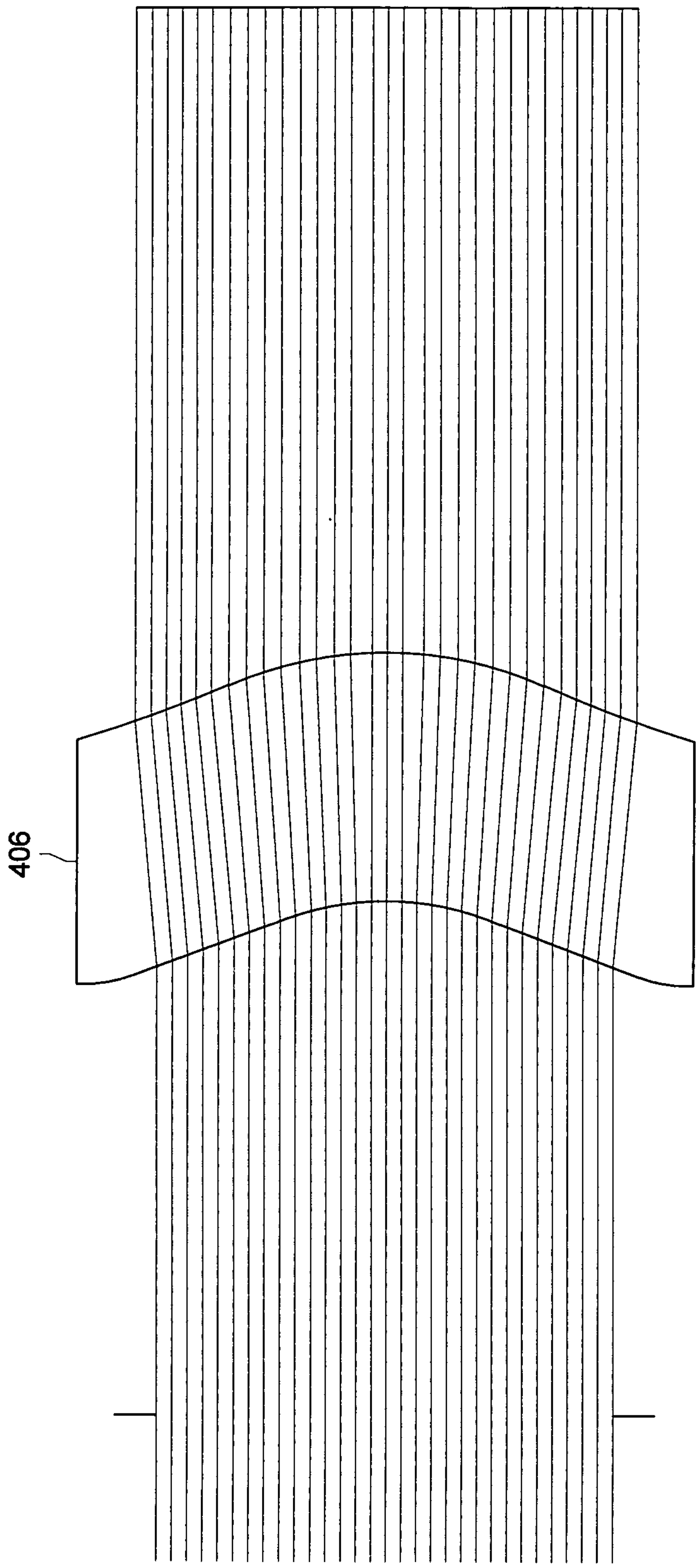


FIG. 4

FIG. 5

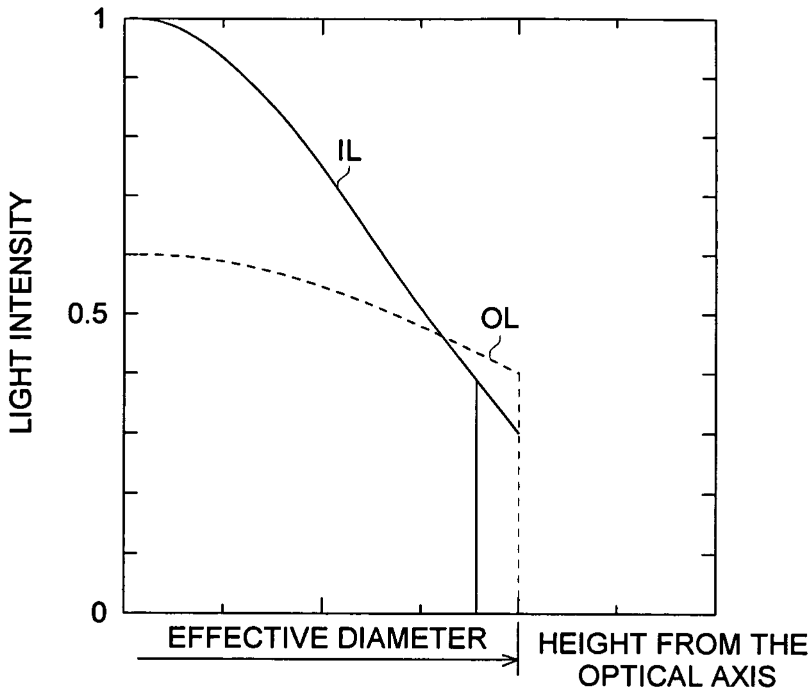
1
0.5
0
LIGHT INTENSITY
IL
OL
EFFECTIVE DIAMETER
HEIGHT FROM THE OPTICAL AXIS

FIG. 6 ( a )

WAVELENGTH: 405 nm
NA: 0.85

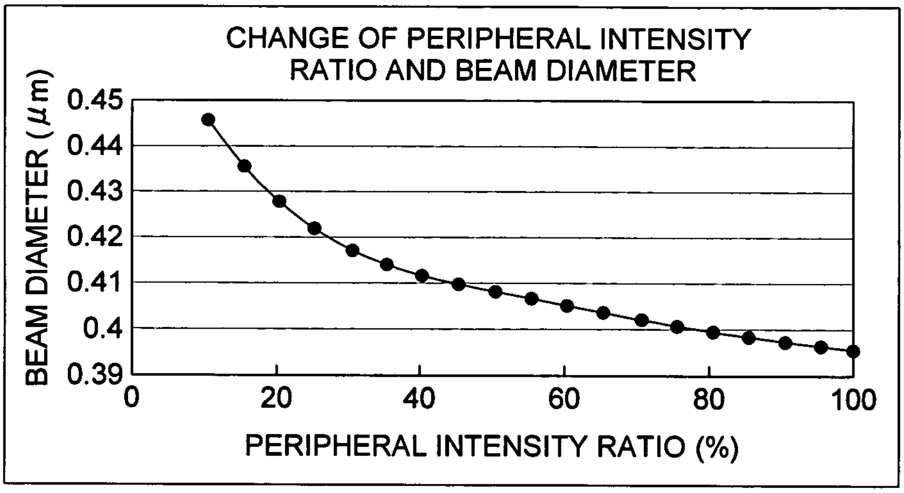


FIG. 6 ( b )

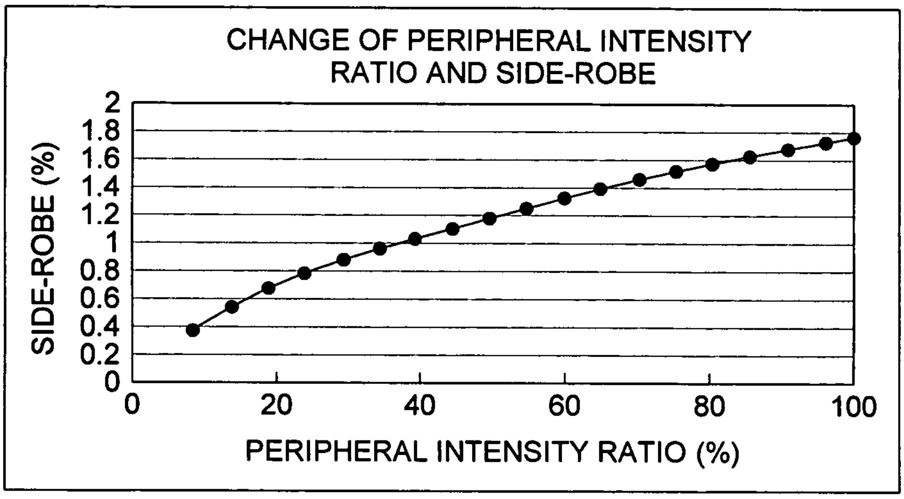

**INTERNATIONAL SEARCH REPORT**

International application No.
PCT/JP2004/005626

A. CLASSIFICATION OF SUBJECT MATTER
Int.Cl[7] G11B7/135

According to International Patent Classification (IPC) or to both national classification and IPC

B. FIELDS SEARCHED

Minimum documentation searched (classification system followed by classification symbols)
Int.Cl[7] G11B7/09-7/135

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-203333 A (Konica Corp.), 19 July, 2002 (19.07.02), Par. Nos. [0130] to [0141]; Fig. 41 & WO 02/33700 A2 & EP 1199717 A2 & US 2002-0135891 A1 & AU 9424801 A & CN 1349121 A | 1-20 |
| Y | JP 2000-276760 A (Sanyo Electric Co., Ltd.), 06 October, 2000 (06.10.00), Par. No. [0054]; Figs. 1, 5, 7 & US 6618424 B & CN 1269580 A | 1-11 |
| Y | JP 2002-352466 A (Konica Corp.), 06 December, 2002 (06.12.02), Figs. 1, 3 to 5 (Family: none) | 13-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 July, 2004 (15.07.04) | 03 August, 2004 (03.08.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No. PCT/JP2004/005626

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-367213 A (Konica Corp.), 10 December, 2002 (10.12.02), Par. Nos. [0058] to [0081]; Fig. 1 (Family: none) | 13-14 |
| Y | JP 2002-373445 A (NEC Corp.), 26 December, 2002 (26.12.02), Par. Nos. [0025] to [0035]; Fig. 1 & US 2002-0191515 A1 | 16 |
| Y | JP 2002-83434 A (Pioneer Electronic Corp.), 22 March, 2002 (22.03.02), Par. Nos. [0020] to [0061]; Fig. 14 & US 2002-0006087 A1 | 16 |
| Y | JP 2003-77167 A (Pioneer Electronic Corp.), 14 March, 2003 (14.03.03), Par. Nos. [0013] to [0058]; Fig. 1 & EP 1288926 A1 & CN 1404047 A & US 2002-0081530 A1 | 1-19 |

Form PCT/ISA/210 (continuation of second sheet) (January 2004)